Europäisches Patentamt

European Patent Office

Office européen des brevets

(19)

(11) Veröffentlichungsnummer: **0 028 751**

**A1**

(12)

# EUROPÄISCHE PATENTANMELDUNG

(21) Anmeldenummer: 80106564.0

(22) Anmeldetag: 25.10.80

(51) Int. Cl.³: **H 04 J 15/00**
H 01 S 3/08, H 04 B 9/00

(30) Priorität: 09.11.79 DE 2945219

(43) Veröffentlichungstag der Anmeldung:
20.05.81 Patentblatt 81/20

(84) Benannte Vertragsstaaten:
AT BE CH DE FR GB IT LI NL SE

(71) Anmelder: TE KA DE Felten & Guilleaume
Fernmeldeanlagen GmbH
Thurn-und-Taxis-Strasse 10 Postfach 4943
D-8500 Nürnberg 1(DE)

(72) Erfinder: Mannschke, Lothar, Dipl.-Ing.
Rodelhang 8
D-8501 Eckental(DE)

(54) Anordnung zum Übertragen von Nachrichten in Lichtleitern.

(57) Für Wellenlängen-Multiplex-Verfahren werden Halbleiterlaser durch eine externe optische Rückkopplung auf einen schmalbandigen Arbeitsbereich abgestimmt. Temperatureinflüsse werden dadurch verringert, so daß Übertragungskanäle dichter nebeneinander angeordnet werden können. Dadurch entfällt das aufwendige Aussuchen passender Sätze von Lasern für je einen Sender.

Fig. 2

0028751

TE KA DE  Felten & Guillcaume
Fernmeldcanlagen GmbH

Den 02.11.1979
P 79418

Anordnung zum Übertragen von Nachrichten in Lichtleitern

Die Erfindung betrifft eine Anordnung zum Übertragen
von Nachrichten im Wellenlängen-Multiplex-Verfahren
mit Trägerstrahlung, die pro Kanal in je einem wellenlängenabhängig abstimmbaren Halbleiterlaser modulierbar erzeugt,    optisch zusammengefaßt, in einen
Lichtleiter eingekoppelt und empfangsseitig selektiv
ausgelesen wird. Die Übertragungsleistung optischer
Nachrichtenkanäle wird durch solche Multiplexsysteme
noch weiter verbessert.

Bei einer aus "Applied Optics", Vol.8, No.8 ab Seite
1253 seit dem 15.04.79 prinzipiell bekannten Anordnung zum Übertragen von Nachrichten in Lichtleitern
werden als Lichtquellen für in der Wellenlänge unterscheidbare Trägerstrahlung Halbleiterlaser verwendet,
die nach technisch aufwendiger Prüfung zu einem Satz
für einen Sender zusammengestellt werden. Dieser aufwendige Auslesevorgang ist deshalb erforderlich, weil
bei der Herstellung die künftige Mittenwellenlänge des
Lasers nicht genau vorherbestimmt werden kann. Die ausgewählten Halbleiterlaser haben ferner den Nachteil,
daß außer der Mittenwellenlänge weitere von Temperaturschwankungen abhängige Nebenwellenlängen mehr oder weniger stark hervortreten, so daß die Anzahl der nebeneinander in einem Lichtleiter verwendbaren Kanäle dadurch beschränkt ist.

Der Erfindung liegt daher die Aufgabe zugrunde, eine
Nachrichten-Übertragungsanordnung mit möglichst vielen Kanälen zu schaffen, deren Strahlungsquellen für
Lichtleiter-Multiplexübertragung problemlos herstellbar und zusammenstellbar sind.

Diese Aufgabe wird bei einer Anordnung der eingangs genannten Art dadurch gelöst, daß jeder Halbleiterlaser durch eine externe optische Rückkopplung zu einem erweiterten Resonator ergänzt ist und daß der externe Teil des Resonators einen gefalteten Strahlengang mit einem mechanisch verstellbaren Bauelement hat.

Die Erfindung verwendet also die bereits bei Herstellung grob abgestimmten Halbleiterlaser, ohne sie mühsam nach der jeweiligen Mittenfrequenz auszusuchen. Die Halbleiterlaser werden vielmehr mit dem externen Teil des Resonators auf eine schmalbandige Trägerwellenlänge weitgehend nebenlinienfrei abgestimmt, wodurch von den Nebenlinien verursachte Störungen bei Temperaturschwankungen vermieden werden. Vorteilhafte Weiterentwicklungen sind in den Unteransprüchen angegeben.

Besonders vorteilhaft erweist sich dabei eine Anordnung, bei der der externe Teil des Resonators auf der, der abgehenden Strahlung gegenüberliegenden Seite eines Halbleiterlasers angekoppelt ist, um die Arbeitweise und die Abstimmung solcher Laser getrennt steuern zu können.

Ein wesentlicher Vorteil besteht vor allem darin, daß der externe Teil des Resonators selbst auch noch Mittel zum Ausgleichen der bereits weitgehend unterdrückten Einflüsse von Temperaturschwankungen hat, die vorteilhaft aus mindestens einer planparallelen, strahlungsdurchlässigen Platte bestehen. Dadurch wird über einen großen Temperaturbereich ein besonders schmalbandiger Laserwellenlängenbereich (Farbe) eingestellt, der vorzugsweise im Bereich von 800 und 1300 nm liegt.

Ein weiterer Vorteil besteht aus der Verwendung eines Spiegels zum Falten des Strahlenganges, um besonders gedrängte Bauweise des externen Teils des Resonators zu erzielen. In vorteilhafter Ausgestaltung erweist sich gegenüber dem Spiegel zum Strahlengangfalten ein weiterer, den externen Teil des Resonators begrenzender Spiegel als zweckmäßig. Die Qualität des externen Resonators wird vorteilhaft mit sphärisch gekrümmten Spiegeln verbessert, wobei einer der Spiegel das mechanisch verstellbare Bauelement ist.

Ein besonders preisgünstiger externer Resonator wird mit einem im Strahlengang liegenden Gitter hergestellt, und zwar besonders vorteilhaft durch ein auf der Oberfläche eines Spiegels liegendes Gitter. Besonders schmalbandige Trägerwellenlängen können vorteilhaft mit auf beiden Spiegeln eingeritzten Gittern erzeugt werden.

Besonders einfache Anordnungen haben vorteilhaft Liniengitter, gegenüber denen vorteilhaft auch auf dem mechanisch beweglichen Bauelement anbringbare Gitter verwendbar sind.

Weitere vorteilhafte Ausgestaltungen der Erfindung bestehen aus im Strahlengang des als Interferometer wirkenden externen Teiles des Resonators angeordneten weiteren, die Wellenlänge und/oder die Phase beeinflussenden Bauelementen. In praktischen Versuchen ergaben vorteilhaft Anordnungen besonders gute Ergebnisse, deren externe Teile des Resonators einen Strahlengang eines nach Wadsworth benannten Interferometers haben.

Anhand der in der Zeichnung schematisch dargestellten Ausführungsbeispiele wird die Erfindung näher erläutert, wobei

Fig.1 einen Übersichtsplan einer Lichtleiter-Übertragungsstrecke mit verstellbaren Resonatoren und

- 4 -

Fig.2 den Strahlengang eines Resonators von Fig.1
zeigen.

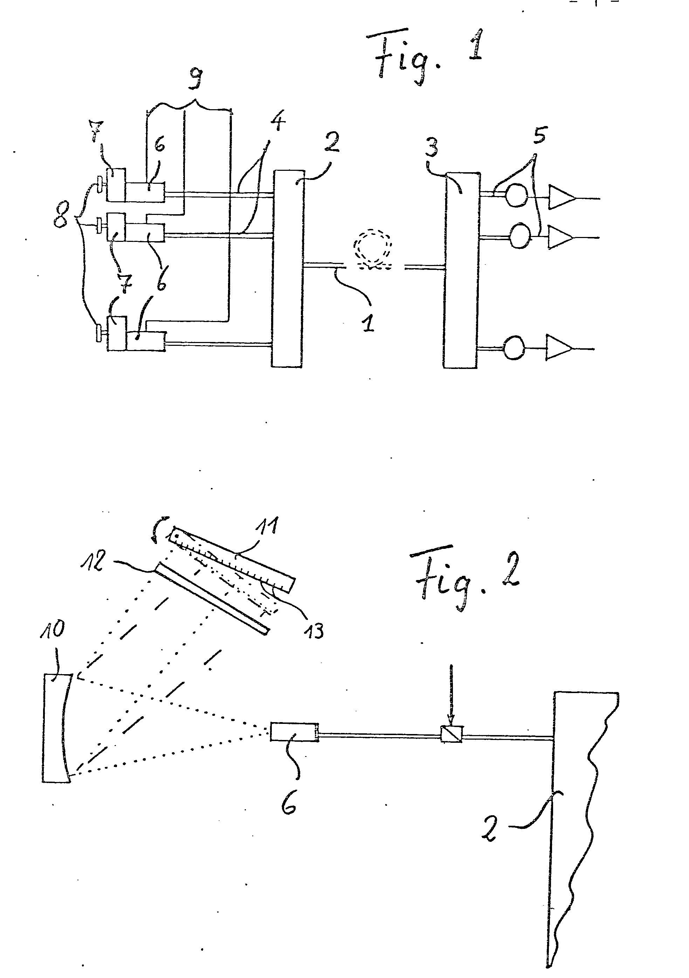

Die aus senderseitiger Einkopplungsvorrichtung 2, dem
Lichtleiter 1, z.B. einem Lichtleitkabel, und empfangsseitig aus Auslesevorrichtung 3 bestehende Anordnung der Figur 1 hat senderseitig pro Kanal eine
Gallium-Arsenid-Laserdiode als Strahlungsquelle, die
über Einzelfasern 4 zusammengefaßt sind. Jeder Laserdiode ist ein justierbarer externer Teil eines Resonators 7 zugeordnet. Die Einstellbarkeit wird im Beispiel mit der Schraube 8 bewirkt. Dargestellt ist nur
eine einseitig gerichtete Übertragungsstrecke mit Demultiplexern an den Einzelkanälen 5 der Auslesevorrichtung. Bei beidseitig gerichtetem Betrieb werden frequenzfilternde Teile der Resonatoren 7 mitverwendet.

Das Besondere der externen Teile des erweiterten Resonators 7 ist der in Fig.2 dargestellten vergrößerten
Ansicht zu entnehmen und besteht aus einem nach Wadsworth benannten Interferometer Aufbau.

Die Halbleiterlaser 6 werden nach einer an sich bekannten Art und Weise elektrisch oder optisch über
Leitungen 9 kanalweise moduliert (siehe z.B. DE-AS
22 57 278).

Von dem im Ausführungsbeispiel angegebenen Interferometer wird die der abgehenden Strahlung gegenüberliegende Seite des Lasers 6 beeinflußt, indem der Resonanzraum des Lasers 6 um den des mechanisch einstellbaren Interferometers erweitert wird.

Im Resonanzraum des Interferometers befinden sich auf
spiegelnden Flächen angebrachte Strichgitter, von denen je nach Einstellung eine Sendefrequenz bevorzugt
wird. Das an sich schon sehr schmale Band der vom

- 5 -

Laser 6 ausgestrahlten Wellenlänge wird weiter noch
durch eine planparallele Platte 12 verkleinert. Dadurch wird es möglich, viele Trägerwellenlängen
dicht nebeneinander im Multiplex-Verfahren störungsfrei zu übertragen.

Es hat sich herausgestellt, daß die Halbleiterlaser
6 mit externen Resonatorteilen von Temperaturschwankungen nur noch in der Amplitude beeinflußbar sind,
die sich kaum noch auf die Multiplex-Übertragungseigenschaften auswirkt. Dabei ist natürlich wichtig,
daß die Ausleseeinrichtung eine entsprechend schmalbandige Frequenzselektion vornehmen sollte, um die
senderseitig erhöhte Übertragungsqualität auch in
vollem Umfang ausnützen zu können. Schon allein deshalb bieten sich als Ausleseanteile Interferometer-
Aufbauten an, die denen der Sender entsprechen, oder
die auf ähnliche Weise mechanisch genau abstimmbar
sind.

Mechanisch genau arbeitende Stellvorrichtungen sind
aus der Feinwerktechnik hinreichend ausführlich bekannt, so daß auf eine Ausführung der Darstellung
verzichtet werden darf.

Mit einer nicht gezeigten Stellmechanik, die an
Stellgliedern 8 angelenkt sein soll, wird im einfachsten Fall nur ein optisches Bauteil um eine
Achse bewegt. Bei Bedarf eines größeren Stellbereiches können selbstverständlich auch mehrere Bauteile
eines Interferometers veränderbar sein, was jedoch
erfahrungsgemäß einen erhöhten Bedienungsaufwand erfordert. Dieser Aufwand könnte sich jedoch rechtfertigen, wenn auf diese Weise ein Satz vieler Strahlungserzeuger für die Übertragung in einem Lichtleitkabel
zusammengestellt werden können. Es soll möglich sein,

- 6 -

die derzeit praktikablen Wellenlängen von Gallium-
Arsenid-Lasern im Bereich um 800 und 1300 nm zur
Multiplex-Übertragung in einem Lichtleitkabel zusammenzufassen.

In besonders einfach verstellbaren Interferometeranordnungen ist vorteilhaft einer der Spiegel (10, 11)
das mechanisch verstellbare Bauteil, mit dem die gewünschte, bevorzugt auszustrahlende Wellenlänge ausgewählt wird.

- 7 -

TE KA DE  Felten & Guilleaume          Den 02.11.1979
Fernmeldeanlagen GmbH                  P 79418

Ansprüche
_____

1. Anordnung zum Übertragen von Nachrichten im Wellenlängen-Multiplex-Verfahren mit Trägerstrahlung, die
pro Kanal in je einem wellenlängenabhängig abstimmbaren Halbleiterlaser modulierbar erzeugt, optisch
zusammengefaßt, in einen Lichtleiter eingekoppelt
und empfangsseitig selektiv ausgelesen wird,
dadurch gekennzeichnet, daß jeder Halbleiterlaser
(6) durch eine externe optische Rückkopplung zu einem erweiterten Resonator (7) ergänzt ist und daß
der externe Teil des Resonators (7) einen gefalteten Strahlengang mit einem mechanisch verstellbaren
Bauelement (11) hat.

2. Anordnung nach Anspruch 1, dadurch gekennzeichnet,
daß der externe Teil des Resonators (7) auf der,
der abgehenden Strahlung gegenüberliegenden Seite
des Halbleiterlasers (6) angekoppelt ist.

3. Anordnung nach Anspruch 1, dadurch gekennzeichnet,
daß der externe Teil des Resonators (7) Mittel zum
Ausgleichen von Temperaturschwankungen hat, die
aus mindestens einer planparallelen, strahlungsdurchlässigen Platte (12) bestehen.

4. Anordnung nach einem der Ansprüche 1 oder 2, dadurch gekennzeichnet, daß ein Spiegel (10) zum Falten des Strahlengangs des externen Teiles des Resonators (7) vorgesehen ist und daß gegenüber dem Spiegel (10) ein weiterer, den externen Teil des Resonators (7) begrenzender Spiegel (11) angeordnet ist.

5. Anordnung nach Anspruch 4, dadurch gekennzeichnet, daß mindestens einer der Spiegel (10, 11) eine vorgegebene sphärische Krümmung hat.

6. Anordnung nach Anspruch 1, 3 oder 4, dadurch gekennzeichnet, daß im Strahlengang des externen Resonators (7) mindestens ein optisches Gitter (13) auf der Oberfläche mindestens eines Spiegels (11) liegt.

7. Anordnung nach Anspruch 6, dadurch gekennzeichnet, daß mindestens ein Gitter (13) ein Liniengitter ist.

8. Anordnung nach Anspruch 6, dadurch gekennzeichnet, daß mindestens ein Gitter ein holographisches Gitter ist.

9. Anordnung nach Anspruch 1, 3, 4 oder 6, dadurch gekennzeichnet, daß im Strahlengang des als Interferometer wirkenden externen Teiles des Resonators (7) noch weitere die Frequenz oder die Phase beeinflussende Bauelemente vorgesehen sind.

- 9 -

10. Anordnung nach Anspruch 1, <u>dadurch gekennzeichnet</u>, daß der Strahlengang des externen Teiles des Resonators (7) dem nach Wadsworth benannten Interferometer entspricht.

*Fig. 1*

*Fig. 2*

zu TE KA DE P 79418

| | Europäisches Patentamt | EUROPÄISCHER RECHERCHENBERICHT | Nummer der Anmeldung EP 80 10 6564 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | IEEE JOURNAL OF QUANTUM ELECTRO-NICS, Band QE-15, August 1979, Nr. 8, New York, US, H. BACHERT et al.: "Spectral band homogeneous broadening and narrow-band emission of AlGaAs/GaAs injection lasers", Seiten 786-790  *  Figur 1b * | 1,2,4, 6 |
| | OPTICS COMMUNICATIONS, Band 29, Nr. 2, Mai 1979, Amsterdam, NL, E.J. BEITING: "The use of a concave grating in pulsed dye laser cavities", Seiten 209-212  * Seite 209, linke Spalte, Zeilen 18-22 * | 1,2,4, 8,10 |
| | DE - B - 1 194 977 (SPECTRA-PHYSICS)  * Spalte 6, Zeilen 41-66 * | 1,2,4, 7 |
| | DE - A - 2 811 180 (RUDOLF)  * Seite 8, Zeile 18 bis Seite 9, Zeile 2 * | 1,2,4, 6,9 |
| A | US - A - 4 155 628 (SCHLOSSBERG)  * Figur 2 * | 1 |
| | ./. | |

### KLASSIFIKATION DER ANMELDUNG (Int. Cl.³)

H 04 J 15/00
H 01 S 3/08
H 04 B 9/00

### RECHERCHIERTE SACHGEBIETE (Int. Cl.³)

H 04 J 15/00
H 01 S 3/08
H 04 B 9/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |

| Recherchenort Den Haag | Abschlußdatum der Recherche 13-02-1981 | Prüfer GEISLER |

EPA form 1503.1 06.78

Europäisches
Patentamt

**EUROPÄISCHER RECHERCHENBERICHT**

Nummer der Anmeldung
EP 80 10 6564
-2-

| | EINSCHLÄGIGE DOKUMENTE | | KLASSIFIKATION DER ANMELDUNG (Int Cl³) |
|---|---|---|---|
| Kategorie | Kennzeichnung des Dokuments mit Angabe, soweit erforderlich, der Maßgeblichen Teile | betrifft Anspruch | |
| A | <u>FR - A - 1 487 054</u> (IBM)  <br> * Zusammenfassung *  <br><br> - - - - - | 1 | |
| | | | **RECHERCHIERTE SACHGEBIETE (Int. Cl³)** |

EPA Form 1503.2   06.78